# EUROPÄISCHE PATENTANMELDUNG

(11) **EP 4 826 650 A1**
(43) Veröffentlichungstag der Anmeldung: **21.10.2026**
(21) Anmeldenummer: 26172271.4
(22) Anmeldetag: 14.04.2026
(51) Int. Cl.: G06T 7/00

(54) **OPTISCHE INSPEKTION VON PRODUKTMARKIERUNGEN**

(30) Priorität: 14.04.2025 CH 3802025
(71) Anmelder: QualiVision AG, 8810 Horgen (CH)
(72) Erfinder: Czerny, Michael, 8810 Horgen (CH)
(74) Vertreter: Strauss, Steffen

(57) **Zusammenfassung**

Vorgeschlagen wird ein computerimplementiertes Inspektionsverfahren und eine entsprechende Prüfeinrichtung zur optischen Inspektion von Produktmarkierungen unbekannter Gestaltung mit geringem Verarbeitungsaufwand, umfassend zumindest die Schritte:
- Bereitstellen eines Protokolls, welches eine Abfolge von Musterbildern von Produktmarkierungen und eine Referenzierung der Musterbilder mit wenigstens einer Eigenschaft mindestens einer Inhaltsklasse zur Einteilung von Produktmarkierungen in Felder enthält;
- Bereitstellen eines Satzes von wenigstens zwei Musterbildern von Produktmarkierungen in Form gedruckter Musterbilder und/oder als Direktmarkierung ausgebildete Musterbilder, welche zu jeweiligen Musterbild-Datensätzen digitalisiert werden,
oder Bereitstellen von wenigstens zwei virtuellen Musterbildern als Musterbild-Datensätzen;
- Einteilung der Felder der wenigstens zwei Musterbild-Datensätze nach den Inhaltsklassen mittels wenigstens einer Erkennungsoperation anhand des Protokolls;
- Zuordnung von Prüfvorschriften umfassend mindestens einen Prüfparameter an die jeweiligen Felder in Abhängigkeit von den Eigenschaften der Inhaltsklassen der jeweiligen Felder anhand des Protokolls;
- Bereitstellung wenigstens einer Produktmarkierung zur Inspektion;
- Digitale Aufnahme der wenigstens einen Produktmarkierung als Abbild-Datensatz; und
- Prüfen des wenigstens einen Abbild-Datensatzes durch wenigstens eine Prü foperation in Abhängigkeit der Prüfvorschriften.

## Beschreibung

Die Erfindung betrifft ein computerimplementiertes Verfahren zur optischen Inspektion von Produktmarkierungen und eine Prüfeinrichtung zur optischen Inspektion von Produktmarkierungen.

Aus dem Stand der Technik ist zum Beispiel aus der JP 2022 136077 A eine Bildinspektionsvorrichtung mit einem Bildinspektionsprogramm für Drucksachen bekannt, bei der im Vorhinein zu erwartende, korrekte Bilder als Muster zum Vergleich mit Bildern tatsächlich gedruckter, zu inspizierender Drucksachen erstellt werden. Aus der JP 2020 024111 A geht ein Inspektionsverfahren für Drucksachen hervor, bei dem ein direkter Bildvergleich zwischen einem virtuellen Druck und dem realen Druck ausgeführt wird. Der virtuelle Druck wird neben dem realen aus Referenzbilddaten aus z. B. Druckanweisungen erstellt. Außerdem ist aus der DE 10 2015 203 628 A1 bekannt, Sollwerte aus digitalisierten Referenzbildern und eingescannten Druckbildern zu gewinnen, Toleranzen festzulegen und anhand dessen die Bildinspektion durchzuführen.

Aufgabe der Erfindung ist es, ein Inspektionsverfahren und eine entsprechende Prüfeinrichtung zur Inspektion von vielfältig gestaltbaren Produktmarkierungen bereitzustellen, wobei die Inspektion der Produktmarkierungen automatisiert ablaufen kann und einen geringeren Verarbeitungsaufwand mit sich bringt.

Die Aufgabe wird, ausgehend von einem Verfahren eingangs genannter Art, für ein computerimplementiertes Inspektionsverfahren zur optischen Inspektion durch die Merkmale des Anspruchs 1 und für eine entsprechende Prüfeinrichtung zur optischen Inspektion durch die Merkmale des Anspruchs 8 gelöst.

Durch die in den abhängigen Ansprüchen genannten Maßnahmen sind vorteilhafte Ausführungen und Weiterbildungen der Erfindung möglich.

Erfindungsgemäß wird ein computerimplementiertes Verfahren zur optischen Inspektion von Produktmarkierungen bereitgestellt. Produktmarkierungen, auch als Produktkennzeichnungen bekannt, sind Kennzeichnungen auf Waren, sonstigen Produkten bzw. auf deren Verpackung oder Aufmachungen. Ein typischer Anwendungsfall ist die Inspektion von Drucksachen in Form von Etiketten als eine verbreitete Form von Produktmarkierungen, welche zu einem bestimmten Produkt Informationen angeben, etwa Produktionsdatum, Verfallsdatum, Typ, Serie, Eigenschaften, Gebrauchshinweise, Gefahrenhinweise und/oder Preis anzeigen. Etiketten werden häufig auf dem Produkt selbst und/oder einer Produktverpackung eines Produkts angebracht, z. B. geklebt. Alternativ zu Etiketten können Produktmarkierungen auch in Form von Direktmarkierungen auf Produkten aufgebracht und anschließend inspiziert werden. Direktmarkierungen weisen anders als Aufkleber, Etiketten, Plaketten oder Typenschilder kein separates Medium bzw. keinen separaten Träger auf, welcher eine Gestaltung und Inhalte der Gestaltung des Etiketts , trägt '. Direktmarkierungen werden unmittelbar auf dem Produkt oder einer Produktverpackung selbst angebracht, etwa mit einer Lasergravur oder durch direkten Aufdruck.

Produktmarkierungen wie Etiketten werden häufig in Losen einer oder mehrerer Etiketten einer bestimmen Art von Etiketten produziert, z. B. gedruckt, wobei die Losgröße 1 bis N betragen kann. Die Etiketten einer bestimmten Art von Etiketten sind grundsätzlich identisch gestaltet, wobei die grundlegende Gestaltung bzw. das Layout der Etiketten Felder umfasst, die mit Inhalten gefüllt sind. Bei den Inhalten kann es sich etwa um Codes, Grafiken/grafische Elemente, Bilder, Text und/oder Kombinationen hiervon handeln. Felder sind Elemente eines Layouts in Form zusammenhängender Bereiche an wohldefinierten Positionen und mit wohldefinierten Größen. Basierend auf der grundlegenden Kategorie des Inhalts, also etwa Codes, Grafiken/grafische Elemente, Bilder, Text oder Kombinationen hiervon, können den Feldern eines Layouts Inhaltsklassen zugeordnet werden. Unter Inhaltsklassen fallen z. B. Codefelder, Seriennummernfelder, Felder mit kritischen Daten wie Verfallsdatum oder Losnummer in Klartext ebenso wie mal mehr und mal weniger relevante Informationen wie Piktogramme. Diese Inhalte von Feldern sollen je nach Inhaltsklasse des Felds bei einer optischen Inspektion von Produktmarkierungen mit unterschiedlichen Prüfmethoden und/oder Prüfvorschriften geprüft werden.

Das Layout von Produktmarkierungen wie Etiketten umfasst typischerweise zumindest ein Feld mit variablem Inhalt. Variable Inhalte können sich von Etikett zu Etikett eines Satzes einer Art von Etiketten, eines Loses von Etiketten oder dergleichen ändern. Es kann jedoch auch vorgesehen sein, dass eine erste Anzahl von Etiketten eines ersten Satzes oder eines ersten Loses einer Art von Etiketten bezüglich zumindest eines jeweiligen Felds, welches f ür variable Inhalte vorgesehen ist, identische Inhalte aufweist, sich jedoch hinsichtlich der Inhalte des betreffen Felds von einer weiteren, zweiten Anzahl von Etiketten oder eines weiteren, zweiten Loses einer Art von Etiketten unterscheidet. Der Grad der Variabilität eines Felds einer Etikette eines Satzes oder eines Loses einer Art von Etiketten kann entsprechend der jeweiligen Anforderungen an eine Produktmarkierung unterschiedlich sein. Als Beispiele für variable Inhalte seien Seriennummern, Chargennummern, ein Datum wie Produktionsdatum oder Haltbarkeitsdatum oder dergleichen genannt. Regelmäßig enthalten Felder eines Layouts, welche variablen Inhalt aufweisen, Inhalt von höherer Relevanz.

Ein Detailbeispiel einer Inhaltsklasse einer Produktmarkierung mit hoher Relevanz für eine Prüfung im Zuge einer optischen Inspektion von Produktmarkierungen ist ein Mindesthaltbarkeitsdatum (MHD). Ein MHD soll typischerweise mit hoher Priorität geprüft werden, wobei die hohe Priorität bei der Prüfung bzw. die hohe Relevanz der Inhaltsklasse "MHD " eine mögliche Eigenschaft dieser Inhaltsklasse ist. Da ein Feld mit der Inhaltsklasse "MHD " regelmäßig ein variables Feld ist, kann eine weitere Eigenschaft der Inhaltsklasse "MHD " die Variabilität sein bzw. repräsentieren.

Des Weiteren kann das Layout von Produktmarkierungen wie Etiketten zumindest ein Feld mit statischem Inhalt umfassen. Statische Inhalte sind Inhalte eines Feldes, welche zumindest für alle Etiketten eines Satzes oder eines Loses von Etiketten unveränderlich (statisch) sind. Dies kann etwa statische Textfelder betreffen. Außerdem können auch Bilder zu diesen Feldern gehören, etwa produkttypische Logos und/oder Marken in Bild-, Grafik- und/oder Textform oder Kennzeichnungen, die beispielsweise anzeigen, wie ein Produkt recycelt werden kann. Denkbar ist auch, dass die Felder Barcodes, 2D-Codes oder dergleichen als Inhalt aufweisen. Regelmäßig enthalten Felder eines Layouts, welche statischen Inhalt aufweisen, Inhalt von geringerer Relevanz. Ein davon abweichendes Beispiel hoher Relevanz kann ein Feld mit einem statischen grafischen Inhalt (z. B. ein Piktogramm) sein, welcher einen Gefahrenhinweis darstellt.

Codes, Logos, Grafiken und/oder Bilder können auch variabler Inhalt eines Felds eines Layouts einer Produktmarkierung sein. Felder mit entsprechendem variablem Inhalt werden wegen höherer Relevanz des Inhalts bei einer Inspektion regelmäßig ausgelesen, d. h., es wird beispielsweise nicht nur geprüft, ob ein Feld, welches Code beinhalten soll, tatsächlich einen Code beinhaltet und der Code (maschinen-)lesbar ist, sondern die in dem betreffenden Code codierte Information wird zusätzlich explizit ausgelesen und mit einem vorgegebenen Sollwert verglichen. Es wird also bei einer Inspektion geprüft, ob das Codefeld tatsächlich die Information enthält, die es enthalten soll.

Im Rahmen des erfindungsgemäßen computerimplementierten Verfahrens zur optischen Inspektion von Produktmarkierungen wird zunächst ein Protokoll bereitgestellt, welches eine Abfolge von Musterbildern von Produktmarkierungen und eine Referenzierung der Musterbilder mit wenigstens einer Eigenschaft mindestens einer Inhaltsklasse zur Einteilung von einzelnen Bereichen bzw. Feldern von Produktmarkierungen enthält. Im Protokoll kann beispielsweise enthalten sein, welchen Informationsgehalt ein Feld zumindest eines Musterbilds der Abfolge von Musterbildern besitzt, welches mit einer bestimmten Farbe hinterlegt ist, etwa ein Ablaufdatum auf rotem Grund.

Zusätzlich zum Bereitstellen des Protokolls erfolgt das Bereitstellen eines Satzes von wenigstens zwei Musterbildern von Produktmarkierungen in Form gedruckter Musterbilder oder virtueller Musterbilder von Produktmarkierungen. Die Musterbilder sind dabei Abbilder von Musterproduktmarkierungen, Musterdrucksachen bzw. Musteretiketten, welche in einem Produktivbetrieb real erstellte, z. B. gedruckte, und anschließend im Rahmen einer Qualitätskontrolle zu inspizierende Produktmarkierungen repräsentieren. Virtuelle Musterbilder liegen per se als jeweiliger Musterbild-Datensatz vor, weil es sich bei virtuellen Musterbildern grundsätzlich um Abbilder von Musterproduktmarkierungen in digitaler Form, d. h. als Bilddatei oder dergleichen, handelt. Gedruckte, d. h. real produzierte Musterbilder werden z. B. mit einer Digitalkamera aufgenommen, eingelesen oder gescannt. Durch das Einlesen von gedruckten Musterbildern werden so aus den einzelnen gedruckten Musterbildern Musterbild-Datensätze - mindestens ein Musterbild-Datensatz pro gedrucktem Musterbild - erzeugt, die dann ebenso wie die virtuellen Musterbilder in digitaler Form, d. h. als Bilddatei oder dergleichen, vorliegen. Gedruckte Musterbilder schließen auch Direktmarkierungsmusterbilder - Musterbilder von Direktmarkierungen als Produktmarkierungen - mit ein. In digitaler Form entspricht ein Satz mehrerer Musterbilder bzw. eine Abfolge von Musterbildern einem Satz von Musterbild-Datensätzen umfassend wenigstens einen Musterbild-Datensatz pro in dem Satz oder der Abfolge von Musterbildern enthaltenen Musterbildern.

Mittels wenigstens einer Erkennungsoperation anhand des Protokolls, welche an den Musterbild-Datensätzen des Satzes bzw. der Abfolge von Musterbild-Datensätzen durchgeführt wird, erfolgt eine Erkennung von Feldern in den Musterbild-Datensätzen, eine Einteilung des zu Grunde liegenden Layouts in die erkannten Felder und eine Einteilung der Felder nach den Inhaltsklassen. Durch eine Erkennungsoperation werden die Musterbilder bzw. die Musterbild-Datensätze beispielsweise hinsichtlich Position, Größe und Inhalt der in der zu Grunde liegenden Gestaltung enthaltenen Felder analysiert. Die Analyse erfolgt dabei aufgrund von Vorgaben im Protokoll mittels der im Protokoll enthaltene Referenzierung wenigstens einer Eigenschaft zumindest einer Inhaltsklasse zur Einteilung von Feldern von Produktmarkierungen. Dadurch wird wenigstens eine an der dem Protokoll zugeordneten (referenzierten) Abfolge von Musterbildern bzw. Musterbild-Datensätzen durchzuführende Erkennungsoperation definiert. Eine Erkennungsoperation kann zur Durchführung an einen Musterbild-Datensatz, mehreren Musterbild-Datensätzen und/oder einer Kombination (Verknüpfung) mehrerer Musterbild-Datensätze des Satzes bzw. der Abfolge von Musterbild-Datensätzen vorgesehen sein. Es können mehrere identische und/oder verschiedene Erkennungsoperationen z. B. in einer Folge von Erkennungsoperationen miteinander kombiniert sein und durchgeführt werden.

Das erfindungsgemäß bereitgestellte Protokoll umfasst eine Abfolge (Reihenfolge) eines zugehörigen (referenzierten) Satzes von Musterbildern von Produktmarkierungen und wenigstens eine Eigenschaft zumindest einer Inhaltsklasse für jedes Musterbild in dem zugehörigen Satz von Musterbildern. Das Protokoll stellt ein Mindestmaß an Information über den zugehörigen Satz von Musterbildern bereit, welche zusammen mit einer oder mehreren Erkennungsoperationen an jedem der Musterbilder und/oder an einem Resultat wenigstens einer mathematischen Verknüpfung zumindest zweier Musterbilder des zugehörigen Satzes von Musterbildern die Erkennung von Feldern der den Musterbildern zu Grunde liegenden gemeinsamen Gestaltung (des gemeinsamen Layouts) und eine Zuordnung von zumindest einer Prüfvorschrift an jedes erkannte Feld der Gestaltung ermöglicht. Entweder wird ein Satz von Musterbildern anhand eines vorgegebenen Protokolls erzeugt oder die Erzeugung der Musterbilder eines Satzes von Musterbildern wird im Protokoll gewissermaßen mitgeschrieben, also protokolliert. Da bei einer Inspektion von Produktmarkierungen nicht zwingend erforderlich und/oder vorgesehen ist, jedes Feld der Gestaltung von zu inspizierenden Produktmarkierungen zu prüfen, ist nicht zwingend jedes Feld der der entsprechenden Produktmarkierungen zu Grunde liegenden Gestaltung mit wenigstens einer Eigenschaft einer Inhaltsklasse im Protokoll enthalten (referenziert).

Die Abfolge der Musterbilder eines Satzes von Musterbildern im Protokoll ist dabei die Reihenfolge, in welcher Musterbilder von Produktmarkierungen bzw. die entsprechenden Musterbild-Datensätze in dem zu dem Protokoll gehörigen Satz von Musterbildern/Musterbild-Datensätzen vorliegen und analysiert werden. Zusätzlich umfasst das Protokoll eine Referenzierung (Beziehung) zwischen den Musterbildern und wenigstens einer Eigenschaft mindestens einer Inhaltsklasse. Im Protokoll ist also zu jedem Musterbild zumindest eine Inhaltsklasse angegeben, welche das Musterbild aufweist, sowie wenigstens eine Eigenschaft der angegebenen Inhaltsklasse. Beispielsweise kann Musterbild Nummer sieben aus einem Satz von Musterbildern ein Feld mit einem MHD als Inhalt des Felds aufweisen (Datumsfeld als spezielle Variante eines Textfelds). Im Protokoll wäre demnach vermerkt, dass Musterbild Nummer sieben die Inhaltsklasse "MHD " aufweist. Das beispielhafte, in Musterbild sieben enthaltene MHD kann zusätzlich explizit im Protokoll als Inhalt des Feldes des Musterbilds mit der Inhaltsklasse "MHD " angegeben sein. Ein MHD ist regelmäßig ein variabler Inhalt eines Felds eines Layouts einer Produktmarkierung. Des Weiteren kann es ein Inhalt bzw. eine Inhaltsklasse von hoher Relevanz sein. Dementsprechend kann der Inhaltsklasse "MHD " als Eigenschaft , variabel ' und/oder , hohe Relevanz ' zugeordnet und entsprechend im Protokoll vermerkt sein. Die Variabilität des Inhalts eines Feldes und die Relevanz des Inhalts können auch zu einer gemeinsamen Eigenschaft der entsprechenden Inhaltsklasse zusammengeführt und entsprechend im Protokoll vermerkt sein.

Zusätzlich können über wenigstens eine gemeinsame Eigenschaft mindestens einer Inhaltsklasse verschiedene Musterbilder, d. h. mindestens zwei Musterbilder eines Satzes von Musterbildern im Protokoll miteinander referenziert sein. Eine derartige Referenzierung zwischen verschiedenen Musterbildern im Protokoll bestimmt eine mathematische Verknü pfung der miteinander referenzierten Musterbild-Datensätze der Abfolge von Musterbild-Datensätzen, welche auf die miteinander referenzierten Musterbilder anzuwenden ist, sowie wenigstens eine Erkennungsoperation, welche an dem Resultat der mathematischen Verknüpfung der Musterbild-Datensätze durchzuführen ist.

Insgesamt gibt es damit drei Ebenen der Referenzierung im Protokoll: Die erste Ebene ist ein Satz von Musterbildern mit einer wohldefinierten Abfolge und ein zugehöriges Protokoll, in dem die Abfolge enthalten ist. Auf der zweiten Ebene der Referenzierung ist zu jedem Musterbild der Abfolge von Musterbildern wenigstens eine Eigenschaft zumindest einer Inhaltsklasse in dem Protokoll enthalten. Auf der dritten Ebene kann, muss aber nicht (d. h. optional), für zumindest zwei Musterbilder eines zugehörigen Satzes von Musterbildern im Protokoll wenigstens eine beiden Musterbildern gemeinsame Eigenschaft zumindest einer Inhaltsklasse enthalten sein. Dies definiert eine Beziehung (Referenzierung) zwischen den zumindest zwei Musterbildern in Form zumindest einer auf die miteinander referenzierten Musterbilder anzuwendenden mathematischen Verknüpfung und wenigstens eine auf das Resultat der mathematischen Verknüpfung anzuwendende Erkennungsoperation.

Ausgehend von der Analyse von Musterbildern eines Satzes von Musterbildern mittels wenigstens einer Erkennungsoperation anhand des zugehörigen Protokolls lassen sich die Felder der den Musterbildern zu Grunde liegenden Gestaltung nach Inhaltsklassen einteilen. Anschließend erfolgt eine Zuordnung von Prüfvorschriften an die jeweiligen Felder in Abhängigkeit von den Eigenschaften der Inhaltsklasse der jeweiligen Felder anhand des Protokolls. Eine Prüfvorschrift für das vorstehend bereits erwähnte Beispiel der Inhaltsklasse " MHD " kann dabei eine Erkennung des Feldes als solches, d. h. Suchen und Finden des Feldes im Layout der Produktmarkierung, eine Texterkennung, ein explizites Auslesen des Felds des Layouts mit der Inhaltsklasse "MHD " und ein Vergleich des ausgelesenen Werts mit einem vorgegebenen Wert (Sollwert) für das Mindesthaltbarkeitsdatum umfassen. Zusätzlich kann die Prü fvorschrift beinhalten, dass aufgrund der Eigenschaften der Inhaltsklasse "MHD ", Variabilität und hohe Relevanz, eine, kritische ' (intensive) Prüfung des Feldes bei der Inspektion entsprechender Produktmarkierungen vorgesehen ist. Die Variabilität und die Relevanz können jeweils für sich ein Prüfparameter der Prüfvorschrift fü r das Feld "MHD " oder ein kombinierter Prüfparameter der entsprechenden Prüfvorschrift sein.

Nach Durchführung aller gemäß dem Protokoll auf einen zugehörigen Satz von Musterbild-Datensätzen anzuwendenden Erkennungsoperationen sind allen zu prüfenden Feldern der zu Grunde liegenden Gestaltung wenigstens eine Prüfvorschrift zugeordnet und ein vollständiges Prüfrezept erstellt. Mittels des Prüfrezepts kann dann eine optische Inspektion von Produktmarkierungen derselben Gestaltung erfolgen und umfasst zumindest die Schritte:
- Bereitstellung wenigstens einer Produktmarkierung zur Inspektion;
- Erstellung zumindest eines Abbilds der wenigstens einen Produktmarkierung durch digitale Aufnahme der Produktmarkierung, z. B. mittels einer Kamera oder eines Scanners;
- Prüfen des wenigstens einen Abbild-Datensatzes der Produktmarkierung durch wenigstens eine Prüfoperation in Abhängigkeit der Prüfvorschriften.

Das erfindungsgemäße computerimplementierte Inspektionsverfahren zur optischen Inspektion von Produktmarkierungen ermöglicht es eine Vielzahl von Produktmarkierungen mit unterschiedlichsten Gestaltungen (mit verschiedensten Layouts) zu inspizieren, in dem diese zunächst hinsichtlich der Eigenschaften von Inhaltsklassen der Felder der Gestaltung der Produktmarkierungen analysiert werden, um den zu pr ü fenden Feldern der Produktmarkierungen Prüfvorschriften zuzuordnen und mittels der zugeordneten Prü fvorschrift die optische Inspektion der Produktmarkierungen durchzuführen.

Die im Rahmen des erfindungsgemäßen computerimplementierten Inspektionsverfahrens zur optischen Inspektion von Produktmarkierungen erfolgenden Erkennungsoperationen können grundsätzlich in generische Erkennungsoperationen und erweiterte Erkennungsoperationen unterteilt werden. Eine generische Erkennungsoperation ist zur Anwendung auf bzw. Durchführung an einem Musterbild in digitaler Form, dem jeweiligen Musterbild-Datensatz, vorgesehen und beinhaltet z. B.
- Grafikerkennung,
- Grafikinhaltskennung,
- Bilderkennung,
- Bildinhaltserkennung,
- Codeerkennung (Barcodes, 2D-Codes),
- Codelesen,
- Texterkennung, oder
- Textinhaltserkennung (insbesondere OCR).

Typischerweise schließt eine generische Erkennungsoperation eine Erkennung/Bestimmung von Feldgröße und Feldposition innerhalb einer Gestaltung/eines Layouts mit ein. Mittels einer generischen Erkennungsoperation kann in der Regel auch die räumliche Ausdehnung des Feldes erfasst werden, etwa in Form eines grafisch einhü Ilenden Bereichs bzw. eines umgrenzenden Bereichs.

Die reine Erkennung eines Inhalts eines Felds durch eine generische Erkennungsoperation beschränkt sich üblicherweise zunächst darauf, zu erkennen, ob bzw. dass ein Feld eine bestimmte Kategorie von Inhalt aufweist, z. B. ein Bild, eine Grafik oder einen Text. Eine Inhaltserkennung durch eine entsprechende generische Erkennungsoperation umfasst zusätzlich das Auslesen des Inhalts, d. h. Ermittlung einer in dem Inhalt des Feldes enthaltenen Information und ggf. eine anschließende Prüfung der Information. Ein als Textfeld erkanntes Feld wird dabei z. B. mittels OCR ausgelesen und der ausgelesene Text ggf. anschließend mit einem Sollwert verglichen werden. Es kann also ein Datumsfeld als spezielles Textfeld als solches erkannt, das in dem Datumsfeld enthaltene Datum als die in dem Feld enthaltene Information ausgelesen, mit einem Sollwert für das Datum verglichen und ermittelt werden, ob das Datumsfeld tatsächlich das erwartete Datum enthält. Des Weiteren kann vorgesehen (und notwendig) sein, generische Erkennungsoperationen in einer Folge von generischen Erkennungsoperationen zu kombinieren. So können etwa grafische Elemente und Text als Inhalt eines Feldes in einem Feld kombiniert sein und sollen bzw. müssen voneinander unterschieden werden. Zum Beispiel kann ein Text farbig gedruckt sein oder farbig hinterlegt werden, wobei mittels der Farbe eine weitere Information zusätzlich zu einer im Text enthaltenen Information codiert sein kann. Somit kann eine Erkennungsoperation an einem solchen Feld eine Kombination (z. B. eine Folge) generischer Erkennungsoperationen zur Texterkennung, Textinhaltserkennung und Farberkennung sein.

Eine erweitere Erkennungsoperation ist eine Kombination wenigstens einer mathematischen Verkn ü pfung zumindest zweier Musterbilder eines Satzes von Musterbildern bzw. Musterbild-Datensätzen mit wenigstens einer nachfolgenden Erkennungsoperation. Beispiele für mathematische Verknüpfungen sind:
- Differenzbildung,
- Summation,
- Multiplikation oder
- Vergleich,
wobei entsprechende mathematische Verknüpfungen in Teilen oder vollständig, ggf. pixel- oder pixelregionenbasiert auf die verknüpften Musterbild-Datensätze anwendbar sind. Im Allgemeinen kann eine erweiterte Erkennungsoperation eine beliebig kombinierte Folge einer oder mehrerer mathematischer Verknüpfungen und einer oder mehrerer generischer Erkennungsoperationen umfassen.

Eine auf untereinander referenzierte Musterbilder bzw. Musterbild-Datensätze anzuwendende mathematische Operation kann beispielsweise eine zumindest teilweise bzw. bereichsweise und/oder pixelweise Differenzbildung zweier verschiedener Musterbilder sein. Beinhalten etwa Musterbild sieben und Musterbild elf eines Satzes von Musterbildern jeweils ein Feld mit der Inhaltsklasse "MHD ", wobei das explizit in dem Feld enthaltene Mindesthaltbarkeitsdatum in Musterbild sieben von dem explizit in dem Feld enthaltene Mindesthaltbarkeitsdatum in Musterbild elf abweicht, jedoch alle weiteren Inhalte zusätzlicher Felder des zu Grunde liegenden Layouts der Musterbilder identisch (mit statischen Inhalten versehen) sind, bleibt bei einer pixelweisen Differenzbildung von Musterbild sieben und Musterbild elf im Resultat der Differenzbildung lediglich das Feld mit der Inhaltsklasse "MHD " übrig. Das Feld kann im Resultat der Differenzbildung mittels einer generischen Erkennungsoperation einfach erkannt und dem Feld entsprechend dem Protokoll die Inhaltsklasse " MHD " sowie die ebenfalls in dem Protokoll enthaltene wenigstens eine Eigenschaft der Inhaltsklasse zugeordnet werden.

Bezüglich einer mathematischen Verknüpfung von Musterbildern kann es vorteilhaft sein, zumindest Musterinhalte für Felder von Musterbildern, die gemäß Protokoll mathematisch miteinander verknüpft werden sollen, mit den vorgesehenen mathematischen Verknü pfungen verträglich auszuwählen. In Bezug auf das vorstehende Beispiel der Differenzbildung zweier Musterbilder, bei denen das Feld mit der Inhaltsklasse "MHD " unterschiedliche Musterinhalte aufweist, kann dies bedeuten, dass der Musterinhalt des Felds kein reales Datum darstellt. Stattdessen kann das Feld mit Musterinhalten gefüllt werden, welche dem vorgesehenen Datumsschema für das Mindesthaltbarkeitsdatum folgen. Jedoch wird das Datumsschema jeweils mit einer Buchstaben-/Zahlenkombination gef ü Ilt, bei welcher nach Differenzbildung keine der Stellen des Datumsschemas verschwindet und folglich durch eine Erkennungsoperation an dem Resultat der Differenzbildung das Feld vollständig und sicher erkennbar ist.

Felder bestimmter Inhaltsklassen sind oft an einer bestimmten, immer gleichen Stelle der Produktmarkierung zu finden. Dies muss bei einer Inspektion aber nicht zwingend der Fall sein. Übereinstimmende Felder können auch an bestimmten, sonstigen Eigenschaften (z. B. Variabilität, Relevanz), abgesehen von ihrer Lage, erkannt werden.

Bei einer Ausf ü hrungsform des erfindungsgemäßen computerimplementierten Inspektionsverfahrens zur optischen Inspektion von Produktmarkierungen kann vorgesehen sein, dass die Musterbilder weniger Felder aufweisen als ein Druckbild der zu inspizierenden Produktmarkierungen, also die real verwendete und zu inspizierende Produktmarkierung. Dies hat den Vorteil, dass die Einteilung des gemeinsamen zu Grunde liegenden Layouts der Musterbilder in Felder einfacher wird, insbesondere dann, wenn Musterbilder nur noch ein Feld aufweisen. Weist zum Beispiel eine Produktmarkierung drei verschiedene Felder unterschiedlicher Inhaltsklassen auf, so können drei verschiedene Musterbild-Datensätze mit jeweils nur einem der Felder bereitgestellt werden, um die Verarbeitung und Analyse der Musterbild-Datensätze zu vereinfachen. Die Felder bzw. die unterschiedlichen Arten von Feldern können jeweils auch an unterschiedlicher Position der Produktmarkierung angeordnet sein. Eine derartige Erstellung eines Satzes von Musterbildern geht entsprechend in ein zugehöriges Protokoll ein oder die derartige Erstellung eines Satzes von Musterbildern erfolgt anhand eines entsprechend vorgegebenen Protokolls.

Musterbilder können also auch derart generiert werden, dass sukzessive lediglich ein Teil der Gesamtzahl an Feldern eines Layouts in einem Musterbild ausgegeben und der verbleibende Teil der Felder des Layouts jeweils weggelassen wird (d. h. keinen Inhalt aufweist). Es können dabei mindestens so viel Musterbilder bzw. Bildinhalte in Musterbildern generiert werden, wie bei einer Produktmarkierung unterschiedliche Felder insgesamt vorgesehen sind. Jedes mögliche Feld und jede mögliche Inhaltsklasse sind mindestens einmal in einem Musterbild enthalten. Eine derartige Erstellung eines Satzes von Musterbildern geht entsprechend in ein zugehöriges Protokoll ein oder die derartige Erstellung eines Satzes von Musterbildern erfolgt anhand eines entsprechend vorgegebenen Protokolls.

In einer vorteilhaften Weiterbildung des erfindungsgemäßen computerimplementierten Inspektionsverfahrens ist der Einsatz einer künstlichen Intelligenz, eines Machine-Learning-Verfahrens oder dergleichen, vorgesehen, wobei die Erkennungsoperation, die Einteilung der Felder nach Inhaltsklassen und die Zuordnung von Prüfvorschriften durch einen lernfähigen Algorithmus erfolgt, welcher trainiert wird, indem:
- die wenigstens zwei Musterbild-Datensätze und das zugehörige Protokoll als Trainingsdaten bereitgestellt werden,
- ein reduzierter Repräsentationsdatensatz erstellt wird, indem die Musterbild-Datensätze und das Protokoll in einen trainierbaren Algorithmus eingegeben werden, um die Musterbild-Datensätze in Felder mit bestimmten Inhaltsklassen einzuteilen und in Abhängigkeit der Eigenschaften der Inhaltsklassen den Feldern Prüfvorschriften zuzuordnen.

Der Algorithmus kann dabei grundsätzlich auf die oben angef ü hrten Varianten der Erkennungsoperationen bzw. auf die Ergebnisse aus den Erkennungsoperationen zurü ckgreifen. Hierdurch wird der Automatisierungsgrad, gerade beim Verarbeiten unbekannter Produktmarkierungen, noch weiter erhöht.

Gemäß einer weiteren Ausführungsform des erfindungsgemäßen computerimplementierten Inspektionsverfahrens können Prüfvorschriften (jeweils) einen Prüfparameter beinhalten, welcher eine Sensitivität je nach Inhaltsklasse umfasst, um bei der optischen Inspektion von Produktmarkierungen Felder genauer oder weniger genau zu erfassen oder hinsichtlich ihres Inhalts zu analysieren, d. h., Auslesen des Inhalts zur Bestimmung der enthaltenen Information und ggf. Vergleich der Information mit einem Sollwert. Ist zum Beispiel der Inhalt eines variablen Felds relevant, weil etwa wichtige Daten eines Produkts enthalten sind, so kann dem Prüfparameter eine höhere Sensitivität zugeordnet werden als z. B. einem statischen Feld niedriger Relevanz wie einem Produktlogo, das immer gleich bleibt und aus dem keine speziellen Informationen gewonnen werden. Jedoch können auch statische Felder wichtig sein und dementsprechend können ebenfalls Feldern mit statischem Inhalt Prüfvorschriften zugeordnet sein, welche einen Prüfparameter umfassen, der eine höhere Sensitivität für die entsprechende Prüfoperation an einem solchen Feld bestimmt. Die Zuordnung der Sensitivität erfolgt ausgehend von der oder den Eigenschaften der Inhaltsklasse eines Felds.

Erfindungsgemäß können die Inhaltsklassen zumindest nach wenigstens einem der folgenden Kriterien festgelegt werden:
- statische oder variable Bereiche und/oder
- zusammenhängende Bereiche übereinstimmender Farbe und/oder
- zusammenhängende Bereiche übereinstimmender optische Strukturen und/oder
- Position auf der Produktmarkierung und/oder
- Farbe und/oder
- optische Strukturen und/oder
- in einem Feld enthaltene bzw. codierte Information.

Ist bei einer Ausf ü hrungsform des erfindungsgemäßen computerimplementierten Inspektionsverfahrens vorgesehen, bestimmten Pr ü fvorschriften mittels eines entsprechenden Prüfparameters eine höhere Sensitivität zuzuordnen, so kann bei der korrespondierenden Prüfoperation zum Beispiel auch durch eine Bildverarbeitung oder durch sonstige Maßnahmen eine genauere Analyse erfolgen, um wichtige Informationen zu erfassen. Dadurch kann aber auch im Ablauf Zeit eingespart werden, weil unwichtige Felder nur grob oder gar nicht analysiert / inspiziert werden müssen.

Eine erfindungsgemäße Prüfeinrichtung zur optischen Inspektion von Produktmarkierungen umfasst zumindest eine optische Abbildungseinheit zur optischen Abbildung und Digitalisierung, zumindest eine Speichereinheit und wenigstens eine Datenverarbeitungseinheit. Dabei ist die oder wenigstens eine der Speichereinheit(en) dazu ausgebildet, zumindest zeitweise wenigstens ein der Prüfeinrichtung bereitgestelltes Protokoll, welches eine Abfolge von Musterbildern zur Einteilung von Produktmarkierungen in Felder und eine Referenzierung der Musterbilder mit wenigstens einer Eigenschaft mindestens einer Inhaltsklasse enthält, zu speichern. Des Weiteren ist die oder wenigsten eine der Speichereinheit(en) dazu ausgebildet, zumindest zeitweise wenigstens einen Satz von wenigstens zwei Musterbildern von Produktmarkierungen zu speichern, wobei die Musterbilder der Prüfvorrichtung entweder als virtuelle Musterbilder in Form von Musterbild-Datensätzen oder in Form gedruckter Musterbilder und/oder als Direktmarkierung ausgebildeter Musterbilder, welche durch die optische Abbildungseinheit durch Abbildung und Digitalisierung in Musterbild-Datensätze überführbar sind, bereitgestellt werden. Die oder wenigstens eine der Datenverarbeitungseinrichtung(en) ist dazu ausgebildet, anhand des Protokolls mittels wenigstens einer Erkennungsoperation an dem Satz von wenigstens zwei Musterbild-Datensätzen eine Einteilung der Felder nach den Inhaltsklassen vorzunehmen und nachfolgend anhand des Protokolls eine Zuordnung von Prüfvorschriften an die jeweiligen Felder in Abhängigkeit von den Eigenschaften der Inhaltsklassen der jeweiligen Felder zu treffen. Dabei erfolgt eine Zuordnung zumindest einer Prüfvorschrift an jedes zu prüfende Feld. Die zugeordneten Prüfvorschriften werden durch die entsprechende Datenverarbeitungseinheit zur zumindest zeitweisen Speicherung an die oder eine der Speichervorrichtung(en) übergeben. Zur optischen Inspektion einer Produktmarkierung ist die Produktmarkierung mittels der optischen Abbildungseinheit abbildbar, zu einem Abbild-Datensatz digitalisierbar und wird anschließend der oder eine der Datenverarbeitungseinheit(en) bereitgestellt. Die entsprechende Datenverarbeitungseinheit liest zum Prüfen des Abbild-Datensatzes der Produktmarkierung aus der entsprechenden Speichereinheit die Prüfvorschrift(en) aus und wendet anhand der Prüfvorschrift(en) eine oder mehrere Prüfoperation(en) auf den Abbild-Datensatz an.

### Ausführungsvarianten der Erfindung / Figurenbeschreibung:

Ausführungsvarianten der Erfindung sind in den Zeichnungen dargestellt und werden anhand von weiteren Einzelheiten und Vorteilen näher erläutert. Im Einzelnen zeigen:
- Fig. 1:: eine Variante des erfindungsgemäßen computerimplementierten Inspektionsverfahrens zur optischen Inspektion von Produktmarkierungen, umfassend einen realen Druck von Musteretiketten;
- Fig.2:: eine Variante des erfindungsgemäßen computerimplementierten Inspektionsverfahrens zur optischen Inspektion von Produktmarkierungen, umfassend einen virtuellen Druck von Musteretiketten; und
- Fig. 3:: ein Beispiel für eine Folge von Erkennungsoperationen.

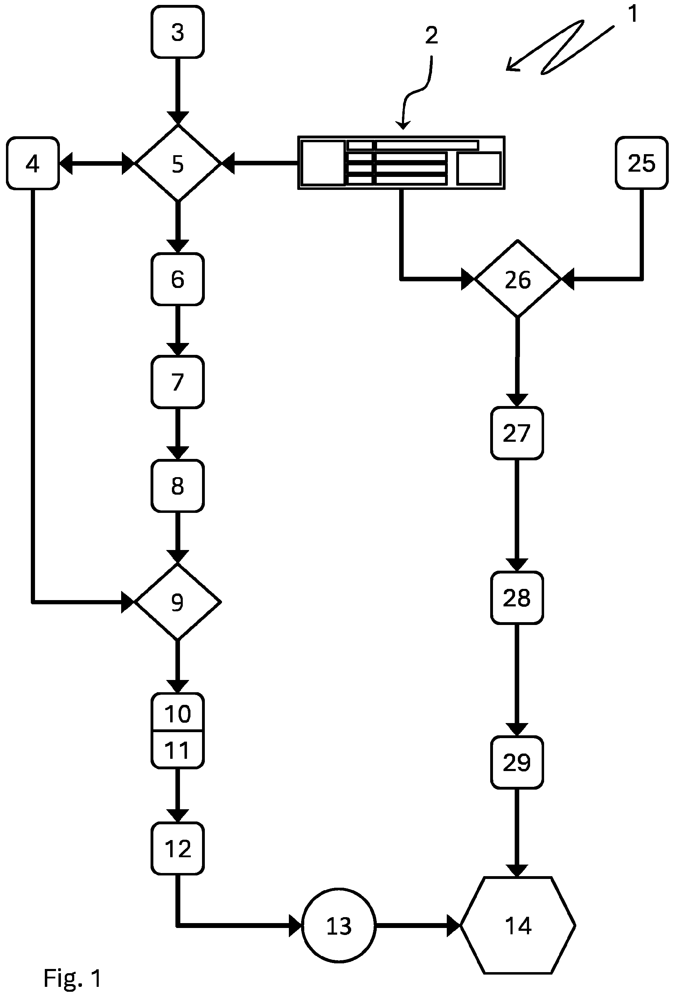

Figur 1 zeigt eine erste Variante 1 des erfindungsgemäßen computerimplementierten Inspektionsverfahrens zur optischen Inspektion von Produktmarkierungen am Beispiel von Drucksachen, hier im Speziellen Etiketten. Bei dieser Variante ist ein realer Druck 6 von Musteretiketten zur Vorbereitung einer späteren Inspektion 14 real produzierter (gedruckter) Etiketten desselben Layouts vorgesehen. Die Gestaltung der Etiketten und der zugehörigen Musteretiketten ergibt sich aus einem vorgegebenen Layout 2, welches Lage, Größe, Form und den vorgesehenen Inhalt eines jeden Felds der Gestaltung der Etiketten und der Musteretiketten beschreibt. Die Felder werden entsprechend des vorgesehenen Inhalts mit Musterinhalten 3 bzw. Musterdaten 3, welche für die vorgesehenen Inhalte repräsentativ sind, gefüllt. Dies geschieht im Rahmen einer Druckvorbereitung 5 vor der anschließenden realen Ausgabe 6 der derart erstellten Musteretiketten durch Drucken, z. B. mittels eines bekannten Druckverfahrens für Etiketten. Die Abfolge und die Referenzierung der erstellten Musteretiketten gehen in ein Protokoll 4 ein, wobei die Musterinhalte 3 in Form wenigstens einer Eigenschaft mindestens einer Inhaltsklasse zur Einteilung von Feldern der Musteretiketten im Protokoll 4 Berücksichtigung finden. Es kann alternativ auch vorgesehen sein, dass das Protokoll 4 Ausgangspunkt für die Erstellung der Musteretiketten ist. Nachfolgend der Ausgabe 6 der erstellten Musteretiketten wird von jeder der ausgegebenen Musteretiketten mindestens ein Bild aufgenommen 7. Die Aufnahme 7 von Bildern von Musteretiketten erfolgt z. B. mittels einer Digitalkamera zum Abbilden und Digitalisieren von Musteretiketten. Damit kann zu jeder Musteretikette mindestens ein Musterbild-Datensatz 8 gewonnen werden. Die Abfolge der Musterbild-Datensätze 8 aller Musteretiketten bildet einen entsprechenden Satz von Musterbild-Datensätzen.

Anschließend erfolgen ausgehend von dem Protokoll 4 eine oder mehrere Erkennungsoperationen 9 an den Musterbild-Datensätzen 8 zur Erkennung von Feldern in den Bildern der Musterbild-Datensätzen 8 der Musteretiketten, eine Einteilung 10 der Musterbild-Datensätze 8 in Felder sowie eine Einteilung 11 der Felder nach Inhaltsklassen. Danach werden in Abhängigkeit von den Eigenschaften der Inhaltsklassen der Felder den Feldern Prüfvorschriften zugeordnet 12. Dadurch ergibt sich eine inhaltsklassenabhängige Zuordnung 12 von Prüfvorschriften an die jeweiligen Felder und schließlich ein Prüfrezept 13, in dem alle Prüfvorschriften zur Prüfung von Etiketten einer bestimmten Art von Etiketten mit einem gemeinsamen zu Grunde liegenden Layout 2 vereinigt sind. Das Prüfrezept 13 kann dann zur Inspektion 14 entsprechender real erstellter und ausgegebener (gedruckter) Etiketten, welche von der Art der Etiketten her den Musteretiketten entsprechen, verwendet werden.

In der Druckvorbereitung 26 zur Produktion der korrespondierenden real erstellten und ausgegebenen (gedruckten) Etiketten werden die Felder des Layouts 2 für jedes zu druckende Etikett mit Produktionsinhalten 25 bzw. Produktionsdaten 25 gefüllt und das Resultat in Form von Druckersteuerungsdaten an einen Drucker zum Ausdrucken 27 der Etiketten übermittelt. Die Produktionsdaten 25 korrespondieren insbesondere zu einem jeweiligen realen Produkt bzw. einer Produktgruppe, welche(s) von einem entsprechenden Etikett markiert bzw. gekennzeichnet werden soll. Die Produktionsdaten 25 können dabei z. B. aus einem ERP-System stammen. Von jedem gedruckten Etikett wird dann mindestens ein digitales Bild des Etiketts aufgenommen 28. Die Aufnahme 28 von Bildern der gedruckten Etiketten kann mittels einer Kamera zum Abbilden und Digitalisieren von real produzierten Etiketten erfolgen. Dabei kann es sich um dieselbe Kamera handeln, welche bereits zur Erstellung von Bildern der Musteretiketten verwendet wurde. Auf die nach der Digitalisierung in Form von Realbild-Datensätzen 29 vorliegenden Bilder von den real produzierten Etiketten wird im Rahmen der Inspektion 14 das Pr ü frezept 13 angewendet. Ausgehend von der Anwendung des Prüfrezepts 13 bei der Inspektion 14 kann z. B. entschieden werden, ob ein Etikett "in Ordnung " oder "nicht in Ordnung " ist. Im letzteren Fall kann ein für "nicht in Ordnung " befundenes Etikett etwa nachfolgend ausgesondert werden.

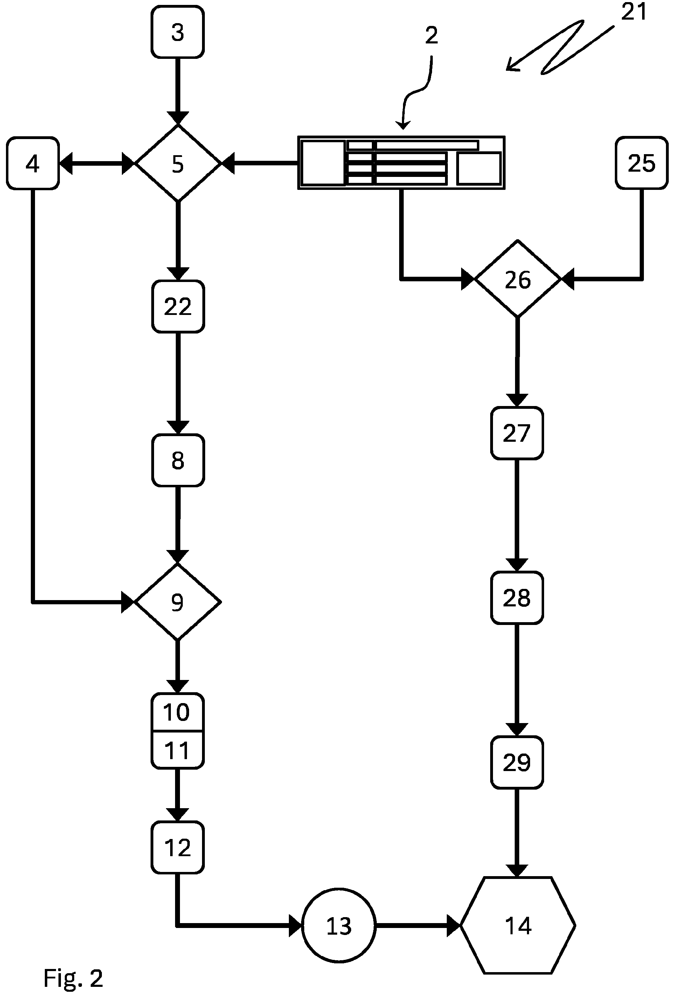

Figur 2 zeigt eine zweite Variante 21 des erfindungsgemäßen Verfahrens zur optischen Inspektion von Produktmarkierungen am Beispiel von Drucksachen, hier im Speziellen Etiketten. Bei dieser Variante ist ein virtueller Druck von Musteretiketten zur Vorbereitung einer späteren Inspektion real produzierter (gedruckter) Etiketten desselben Layouts vorgesehen. Die Gestaltung der Etiketten und der zugehörigen Musteretiketten ergibt sich wiederum aus einem vorgegebenen Layout 2, welches Lage, Größe, Form und den vorgesehenen Inhalt eines jeden Felds der Gestaltung der Etiketten und der Musteretiketten beschreibt und entsprechend des vorgesehenen Inhalts eines jeden Felds der Gestaltung mit Musterinhalten 3 bzw. Musterdaten 3, welche für die vorgesehenen Inhalte repräsentativ sind, gef ü llt werden. Dies geschieht im Rahmen einer Druckvorbereitung 5 vor der anschließenden Ausgabe der derart erstellten Musteretiketten durch virtuellen Druck 22. Bei einem virtuellen Druck 22 werden z. B. aus Druckersteuerungsdaten, welche an einen realen Drucker zwecks Produktion von Drucksachen wie Etiketten übermittelbar sind, digitale Bilder der jeweiligen Drucksachen in Form von Bilddaten bzw. Bilddateien abgeleitet bzw. ausgegeben. Nach dem virtuellen Druck 22 liegen die Musteretiketten daher bereits als jeweilige Musterbild-Datensätze 8 vor. Die Abfolge und die Referenzierung der erstellten Musteretiketten gehen in ein Protokoll 4 ein, wobei die Musterinhalte 3 in Form wenigstens einer Eigenschaft mindestens einer Inhaltsklasse zur Einteilung von Feldern der Musteretiketten im Protokoll 4 Berücksichtigung finden. Es kann alternativ auch vorgesehen sein, dass das Protokoll 4 Ausgangspunkt für die Erstellung der Musteretiketten ist.

Wie bei der ersten Variante 1 aus Fig. 1 erfolgen anschließend ausgehend von dem Protokoll 4 eine oder mehrere Erkennungsoperationen 9 an den Musterbild-Datensätzen 8 zur Erkennung von Feldern in den Bildern/Musterbild-Datensätzen 8 der Musteretiketten, eine Einteilung 10 der Musterbild-Datensätze in Felder sowie eine Einteilung 11 der Felder nach Inhaltsklassen. Danach werden in Abhängigkeit von den Eigenschaften der Inhaltsklassen der Felder den Feldern Prüfvorschriften zugeordnet 12. Dadurch ergibt sich eine inhaltsklassenabhängige Zuordnung 12 von Prüfvorschriften an die jeweiligen Felder und schließlich ein Prüfrezept 13, in dem alle Prüfvorschriften zur Prüfung von Etiketten einer bestimmten Art von Etiketten mit einem gemeinsamen zu Grunde liegenden Layout 2 vereinigt sind. Das Prüfrezept 13 kann dann zur Inspektion 14 entsprechender real erstellter und ausgegebener (gedruckter) Etiketten, welche von der Art der Etiketten her den Musteretiketten entsprechen, verwendet werden. Die Erstellung und Inspektion korrespondierender real erstellter und ausgegebener (gedruckter) Etiketten erfolgt analog zu der ersten Variante 1 des computerimplementierten Inspektionsverfahrens.

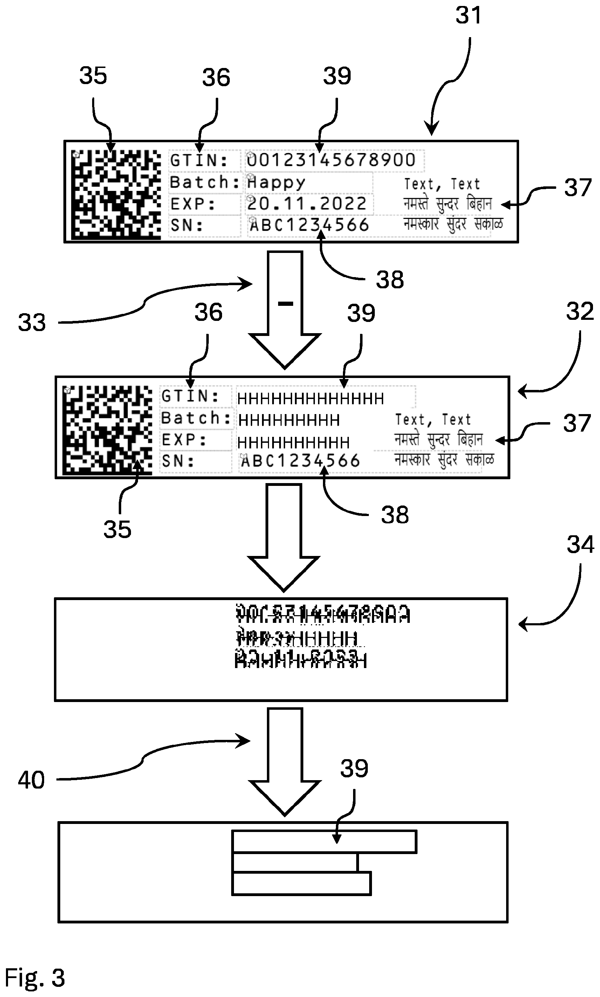

Figur 3 zeigt zwei typische Musterbilder 31, 32, welche durch eine mathematische Verknü pfung 33 miteinander referenziert sind, in diesem Fall durch eine Differenzbildung 33 bzw. Subtraktion 33, welche zu einem Differenzbild 34 der Musterbilder 31, 32 als Resultat der Subtraktion 33 führt. Im Differenzbild 34 fallen die statischen Felder 36, 37, das Codefeld 35 mit allgemeiner Seriennummer und das serialisierte Feld (Feld mit Seriennummer) 38 weg und werden zu "schwarzen Bereichen", d. h. zu Feldern ohne Inhalt bzw. zu nicht mehr als solche erkennbare Felder im Differenzbild 34, da die Felder 35, 36, 37 und 38 bei den Musterbildern 31, 32 mit jeweils identischem Inhalt gefüllt sind. Sichtbar im Differenzbild 34 ist aber das variable Feld 39, welches bei den Musterbildern 31, 32 jeweils mit einem unterschiedlichen Inhalt (der gleichen Inhaltsklasse und der gleichen Eigenschaft der Inhaltsklasse) gefüllt sind. In Musterbild 31 ist das Feld 39 mit realen Daten als Inhalt gefü Ilt, in Musterbild 32 mit einer Pseudo-Zeichenfolge, welche dazu führt, dass das Feld 39 im Differenzbild von einer Erkennungsoperation 40 vollständig und korrekt erkannt werden kann.

An dem Differenzbild wird dann die Erkennungsoperation 40 durchgeführt, bei der das variable Feld 39 als solches erkannt und ein grafisch einhüllender Bereich sowie eine Position für das variable Feld 39 innerhalb der Gesamtheit des Layouts 2 der Musterbilder 31, 32 festgelegt wird.

## Patentansprüche

1. Computerimplementiertes Inspektionsverfahren (1, 21) zur optischen Inspektion von Produktmarkierungen, umfassend folgende Verfahrensschritte:
- Bereitstellen eines Protokolls (4), welches eine Abfolge von Musterbildern (6, 22, 31, 32) von Produktmarkierungen und eine Referenzierung der Musterbilder (6, 22, 31, 32) mit wenigstens einer Eigenschaft mindestens einer Inhaltsklasse zur Einteilung (10) von Produktmarkierungen in Felder (35, 36, 37, 38, 39) enthält;
- Bereitstellen eines Satzes von wenigstens zwei Musterbildern (6, 22, 31, 32) von Produktmarkierungen in Form gedruckter Musterbilder (6) und/oder als Direktmarkierung (6) ausgebildete Musterbilder, welche zu jeweiligen Musterbild-Datensätzen (8) digitalisiert werden,
oder Bereitstellen von wenigstens zwei virtuellen Musterbildern (22) als Musterbild-Datensätzen (8);
- Einteilung (11) der Felder (35, 36, 37, 38, 39) der wenigstens zwei Musterbild-Datensätze (8) nach den Inhaltsklassen mittels wenigstens einer Erkennungsoperation (9, 33, 40) anhand des Protokolls (4);
- Zuordnung (12) von Prüfvorschriften umfassend mindestens einen Prüfparameter an die jeweiligen Felder (35, 36, 37, 38, 39) in Abhängigkeit von den Eigenschaften der Inhaltsklassen der jeweiligen Felder (35, 36, 37, 38, 39) anhand des Protokolls (4);
- Bereitstellung (27) wenigstens einer Produktmarkierung zur Inspektion;
- Digitale Aufnahme (28) der wenigstens einen Produktmarkierung als Abbild-Datensatz (29); und
- Prüfen (14) des wenigstens einen Abbild-Datensatzes (29) durch wenigstens eine Prüfoperation in Abhängigkeit der Prüfvorschriften.

2. Computerimplementiertes Inspektionsverfahren (1, 21) nach Anspruch 1, **dadurch gekennzeichnet, dass** wenigstens eine der Erkennungsoperationen (9, 33, 40) wie folgt ausgebildet ist:
- Verrechnen von wenigstens zwei der Musterbild-Datensätze (6, 22, 31, 32) eines Satzes von Musterbild-Datensätzen (8) in Teilen, vollständig, pixel- oder pixelregionenbasiert und/oder
- Bilden (33) einer Differenz von wenigstens zwei der Musterbild-Datensätze (6, 22, 31, 32) eines Satzes von Musterbild-Datensätzen (8) und/oder
- Texterkennung an einem der Musterbild-Datensätze (8) und/oder
- Erkennen eines grafischen Bestandteils in einem der Musterbild-Datensätze (8) und/oder
- Erkennen eines Barcodes und/oder 2D-Codes in einem der Musterbild-Datensätze (8) und/oder
- Erkennen einer Farbe in einem der Musterbild-Datensätze (8) und/oder
- Erkennen (40) eines Feldes (35, 36, 37, 38, 39), insbesondere als grafisch einhü Ilender und/oder umgrenzender Bereich an einem der Musterbild-Datensätze (8) und/oder
- Erkennen der Position und/oder der Außenkontur eines Feldes an einem der Musterbild-Datensätze (8).

3. Computerimplementiertes Inspektionsverfahren (1, 21) nach einem der vorgenannten Ansprüche, **dadurch gekennzeichnet, dass** wenigstens ein Musterbild (6, 22, 31, 32) bereitgestellt wird, welches weniger Felder (35, 36, 37, 38, 39) aufweist als zu inspizierenden Produktmarkierungen.

4. Computerimplementiertes Inspektionsverfahren (1, 21) nach einem der vorgenannten Ansprüche, **dadurch gekennzeichnet, dass** die Erkennungsoperation (9, 33, 40), die Einteilung (11) der Felder nach Inhaltsklassen und die Zuordnung (12) von Prü fvorschriften durch einen lernfähigen Algorithmus erfolgt, welcher trainiert wird, indem:
- die wenigstens zwei Musterbild-Datensätze (8) und das zugehörige Protokoll (4) als Trainingsdaten bereitgestellt werden;
- ein reduzierter Repräsentationsdatensatz erstellt wird, indem die Musterbild-Datensätze (8) und das Protokoll (4) in einen trainierbaren Algorithmus eingegeben werden, um die Musterbild-Datensätze in Felder (35, 36, 37, 38, 39) mit bestimmten Inhaltsklassen einzuteilen (11) und in Abhängigkeit der Eigenschaften der Inhaltsklassen den Feldern (35, 36, 37, 38, 39) Pr ü fvorschriften zuzuordnen (12).

5. Computerimplementiertes Inspektionsverfahren (1, 21) nach einem der vorgenannten Ansprüche, **dadurch gekennzeichnet, dass** wenigstens eine Prüfvorschrift einen Prü fparameter beinhaltet, welcher eine Sensitivität in Abhängigkeit von einer Inhaltsklasse umfasst, um Felder genauer oder weniger genau zu prüfen und/oder hinsichtlich ihres Inhalts zu erfassen.

6. Computerimplementiertes Inspektionsverfahren (1, 21) nach einem der vorgenannten Anspr ü che, **dadurch gekennzeichnet, dass** die Inhaltsklassen zumindest nach wenigstens einer der folgenden Eigenschaften ausgewählt werden:
- statische oder variable Bereiche (35, 36, 37, 38, 39) und/oder
- zusammenhängende Bereiche übereinstimmender Farbe und/oder
- zusammenhängende Bereiche übereinstimmender optische Strukturen und/oder
- Position auf der Produktmarkierung und/oder
- Farbe und/oder
- optische Strukturen und/oder
- in einem Feld enthaltene bzw. codierte Information.

7. Computerimplementiertes Inspektionsverfahren (1, 15, 21) nach einem der vorgenannten Ansprüche, **dadurch gekennzeichnet, dass** je nach Art des Feldes (35, 36, 37, 38, 39) und/oder der Inhaltskasse eine der Pr ü foperationen mit unterschiedlicher Sensitivität durchgeführt wird.

8. Pr ü feinrichtung zur optischen Inspektion von Produktmarkierungen, umfassend zumindest eine optische Abbildungseinheit zur optischen Abbildung und Digitalisierung, zumindest eine Speichereinheit und wenigstens eine Datenverarbeitungseinheit, wobei
zumindest eine Speichereinheit dazu ausgebildet ist, zumindest zeitweise wenigstens ein der Prüfeinrichtung bereitgestelltes Protokoll (4), welches eine Abfolge von Musterbildern (6, 22, 31, 32) zur Einteilung (10) von Produktmarkierungen in Felder (35, 36, 37, 38, 39) und eine Referenzierung der Musterbilder (6, 22, 31, 32) mit wenigstens einer Eigenschaft mindestens einer Inhaltsklasse enthält, zu speichern;
die oder wenigstens eine der Speichereinheit(en) des Weiteren dazu ausgebildet ist, zumindest zeitweise wenigstens einen Satz von wenigstens zwei Musterbildern (6, 22, 31, 32) von Produktmarkierungen zu speichern, wobei die Musterbilder der Prü fvorrichtung entweder als virtuelle Musterbilder (22) in Form von Musterbild-Datensätzen (8) oder in Form gedruckter Musterbilder (6) und/oder als Direktmarkierung ausgebildeter Musterbilder (6), welche durch die optische Abbildungseinheit durch Abbildung und Digitalisierung in Musterbild-Datensätze überf ührbar sind, bereitgestellt werden;
die oder zumindest eine der Datenverarbeitungseinrichtung(en) dazu ausgebildet ist, anhand des Protokolls (4) mittels wenigstens einer Erkennungsoperation (9, 33, 40) an dem Satz von wenigstens zwei Musterbild-Datensätzen (8) eine Einteilung (11) der Felder (35, 36, 37, 38, 39) nach den Inhaltsklassen vorzunehmen,
und nachfolgend anhand des Protokolls (4) eine Zuordnung (12) von Prüfvorschriften an die jeweiligen Felder (35, 36, 37, 38, 39) in Abhängigkeit von den Eigenschaften der Inhaltsklassen der jeweiligen Felder (35, 36, 37, 38, 39) zu treffen,
und die zugeordneten Pr ü fvorschriften der oder zumindest einer der Speichervorrichtung(en) zur zumindest zeitweisen Speicherung zu übergeben; wobei zur optischen Inspektion einer Produktmarkierung die Produktmarkierung mittels der optischen Abbildungseinheit abbildbar (28), zu einem Abbild-Datensatz (29) digitalisierbar und anschließend der oder wenigstens einer der Datenverarbeitungseinheit(en) bereitstellbar ist; und
wobei durch die entsprechende Datenverarbeitungseinheit zum Prüfen (14) des Abbild-Datensatzes (29) der Produktmarkierung aus der entsprechenden Speichereinheit die Prüfvorschriften auslesbar und anhand der Prüfvorschriften durch die Datenverarbeitungseinheit Pr ü foperationen auf den Abbild-Datensatz (29) anwendbar sind.
